(19) Europäisches Patentamt

European Patent Office

Office européen des brevets

(11) **EP 4 104 148 B1**

(12) **EUROPÄISCHE PATENTSCHRIFT**

(45) Veröffentlichungstag und Bekanntmachung des Hinweises auf die Patenterteilung:
**17.09.2025 Patentblatt 2025/38**

(21) Anmeldenummer: **21707616.5**

(22) Anmeldetag: **11.02.2021**

(51) Internationale Patentklassifikation (IPC):
***G07D 7/121*** *(2016.01)*

(52) Gemeinsame Patentklassifikation (CPC):
**G07D 7/121**

(86) Internationale Anmeldenummer:
**PCT/EP2021/025050**

(87) Internationale Veröffentlichungsnummer:
**WO 2021/160344 (19.08.2021 Gazette 2021/33)**

(54) **OPTISCHER SENSOR ZUR PRÜFUNG VON WERTDOKUMENTEN**

OPTICAL SENSOR FOR EXAMINING VALUABLE DOCUMENTS

CAPTEUR OPTIQUE DESTINÉ À L'EXAMEN DE DOCUMENTS DE VALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2020 DE 102020000968**

(43) Veröffentlichungstag der Anmeldung:
**21.12.2022 Patentblatt 2022/51**

(73) Patentinhaber: **Giesecke+Devrient Currency Technology GmbH**
**81677 München (DE)**

(72) Erfinder: **THIERAUF, Klaus**
**81827 München (DE)**

(74) Vertreter: **Giesecke+Devrient IP**
**Prinzregentenstraße 161**
**81677 München (DE)**

(56) Entgegenhaltungen:
DE-A1- 10 160 578    DE-A1- 10 243 051
US-A- 5 910 663    US-A1- 2002 195 571

EP 4 104 148 B1

## Beschreibung

Die Erfindung betrifft einen optischen Sensor zur Prüfung von Wertdokumenten.

Aus dem Stand der Technik ist es bekannt, Wertdokumente zu beleuchten und die optische Remission des jeweiligen Wertdokuments zu prüfen. Alternativ können die Wertdokumente mit dem Beleuchtungslicht auch optisch angeregt und deren Lumineszenzmesswerte geprüft werden. Der Begriff Lumineszenz wird als Oberbegriff über die nach optischer Anregung von dem Wertdokument zurück emittierte Strahlung verstanden, z.B. Fluoreszenz oder Phosphoreszenz. Das von dem Wertdokument als Folge der Beleuchtung ausgehende Licht wird durch einen Photodetektor detektiert und die detektierten Messwerte werden anschließend ausgewertet. Zur Unterscheidung echter Wertdokumente von Fälschungen wird z.B. geprüft, ob die Remissionsmesswerte bzw. die Lumineszenzmesswerte eines bestimmten Abschnitts eines untersuchten Wertdokuments bestimmte Schwellenwerte über- oder unterschreiten.

Eine optische Messung an Wertdokumenten wird in der DE 102 43 051 A1 diskutiert.

Außerdem ist es bekannt, dass die von einer Lichtquelle emittierte Lichtintensität im Lauf der Betriebsdauer der Lichtquelle üblicherweise abnimmt. Daher wird die emittierte Lichtintensität mit Hilfe einer Monitordiode überwacht, die in der Nähe der Lichtquelle angeordnet ist. Um die abnehmende Intensität der Lichtquelle zu kompensieren, wird dann häufig der Lichtquellenstrom nachgeregelt. Alternativ ist es möglich, die abnehmende Intensität der Lichtquelle bei der Auswertung der erfassten Messwerte des Wertdokuments zu berücksichtigen und nachträglich herauszurechnen. Dabei wird angenommen, dass die erfassten Messwerte proportional zur abnehmenden Lichtintensität der Lichtquelle abnehmen. Das nachträgliche Herausrechnen ist jedoch schwierig, wenn mehrere zueinander benachbarte Lichtquellen verwendet werden, die zur Beleuchtung des Wertdokuments gleichzeitig eingeschaltet werden und deren emittiertes Licht sich auf dem Wertdokument möglicherweise sogar räumlich überlagert. Denn die Messwerte, die der jeweilige Photodetektor von einem Wertdokument detektiert, hängen dann von der Lichtintensität mehrerer Lichtquellen ab, deren emittierte Lichtintensität sich im Lauf der Betriebsdauer unterschiedlich entwickeln kann.

Es ist daher eine Aufgabe der Erfindung, eine Lösung für das nachträgliche Korrigieren der von den Photodetektoren erfassten Wertdokument-Messwerte für den Fall anzugeben, dass sich die emittierte Lichtintensität mehrerer Lichtquellen im Lauf der Betriebsdauer der Lichtquellen unterschiedlich entwickelt.

Diese Aufgabe wird durch die Merkmale der unabhängigen Ansprüche gelöst. In davon abhängigen Ansprüchen sind vorteilhafte Ausgestaltungen und Weiterbildungen der Erfindung angegeben.

Zur Prüfung eines Wertdokuments wird dieses in einen Erfassungsbereich eines optischen Sensors eingebrachten, der zur Prüfung von Wertdokumenten eingerichtet ist. Der optische Sensor umfasst eine Photodetektorzeile, die eine Anzahl K mehrerer nebeneinander angeordneter Detektorelemente aufweist, die dazu ausgebildet sind, jeweils die Intensität des Lichts zu detektieren, das von einem Detektionsbereich des Wertdokuments ausgeht. Darüber hinaus umfasst der optische Sensor eine Lichtquellenzeile, die eine Anzahl N von mehreren nebeneinander angeordneten Lichtquellen aufweist, die die dazu ausgebildet sind, das Wertdokument zu beleuchten. Außerdem weist der optische Sensor eine Monitordetektorzeile auf, die mehrere nebeneinander angeordnete, photoempfindliche (z.B. als Photodetektoren ausgebildete) Monitorelemente aufweist, z.B. eine Anzahl von N Monitorelementen. Es könnten aber auch mehr als N Monitorelemente verwendet werden. Jedes der Monitorelemente ist einer der Lichtquellen zugeordnet, vorzugsweise genau einer der Lichtquellen, und ist dazu ausgebildet, die Intensität des von dieser Lichtquelle emittierten und auf das jeweilige Monitorelement treffenden Lichts zu detektieren. Beispielsweise besteht in dem optischen Sensor eine 1:1-Zuordnung zwischen den Lichtquellen und den Monitorelementen, so dass auch für jede Lichtquelle genau ein Monitorelement vorhanden ist.

Zu einem Zeitpunkt vor der Prüfung der Wertdokumente wird ein Selbsttest des optischen Sensors durchgeführt, den z.B. eine Steuereinrichtung des optischen Sensors durchführt. Bei dem Selbsttest werden die N Lichtquellen eingeschaltet und mit Hilfe der N Monitorelemente die jeweilige Lichtintensität $MS_j$ (j=1...N) der dem jeweiligen Monitorelement zugeordneten Lichtquelle detektiert, die zum Zeitpunkt des Selbsttests auf das jeweilige Monitorelement trifft. Im Rahmen des Selbsttest können die zum Zeitpunkt des Selbsttests von den Monitorelementen detektierten Lichtintensitäten $MS_j$ (j=1...N) überprüft werden. Bei der Überprüfung wird z.B. festgestellt, ob die von dem jeweiligen Monitorelement detektierte Lichtintensität $MS_j$ (j=1...N) zur Prüfung des Wertdokuments ausreicht, z.B. durch Vergleichen mit einer Schwelle, und eine Fehlermeldung ausgegeben, falls ein Monitorelement bei dem Selbsttest eine zu geringe Intensität detektiert hat.

Zur optischen Prüfung eines Wertdokuments wird das zu prüfende Wertdokument in den Erfassungsbereich des optischen Sensors eingebracht, so dass das Wertdokument durch das Licht der Lichtquellen beleuchtet werden kann und das von dem Wertdokument ausgehende Licht von den Detektorelementen detektiert werden kann. Bei dem von dem Wertdokument ausgehenden Licht kann es sich um remittiertes oder durch das Wertdokument transmittiertes Beleuchtungslicht handeln, es kann sich aber auch um Lumineszenzlicht handeln, welches das Wertdokument als Folge einer zur optischen Anregung geeigneten Beleuchtung emittiert, welche die Lichtquellen ggf. emittieren.

Insbesondere wird das Wertdokument entlang einer Transportrichtung an dem optischen Sensor vorbeitransportiert und dabei jeweils ein Detektionsbereich des Wertdokuments in den Erfassungsbereich eingebracht. Die Photodetektorzeile ist quer, z.B. senkrecht oder schräg, zur Transportrichtung des Wertdokuments angeordnet, in der das jeweilige Wertdokument zu dessen Prüfung an dem optischen Sensor vorbeitransportiert wird. Entlang der Transportrichtung benachbart angeordnete Detektionsbereiche des Wertdokuments werden dabei zeitlich nacheinander erfasst. Die nacheinander erfassten Detektionsbereiche des Wertdokuments können jeweils einem Bildpunkt eines von der Photodetektorzeile aufgenommenen Bilds entsprechen.

Um das jeweilige in den Erfassungsbereich eingebrachte Wertdokument mit dem Licht der Lichtquellen zu beleuchten, werden die N Lichtquellen des optischen Sensors gleichzeitig eingeschaltet. Bei den N Lichtquellen kann es sich um alle oder um nur eine Teilmenge der in der Lichtquellenzeile enthaltenen Lichtquellen handeln (ggf. werden Lichtquellen am Rand der Zeile nicht benutzt). Mittels der Detektorelemente werden Messwerte des jeweiligen Wertdokuments aufgenommen, die der von dem jeweiligen Wertdokument als Folge der Beleuchtung ausgehenden Lichtintensität entsprechen. Die K Detektorelemente der Photodetektorzeile nehmen dabei jeweils zumindest einen Messwert $D_i$ ($i=1...K$) des Wertdokuments auf. Bei den K Detektorelementen kann es sich um alle oder um nur eine Teilmenge in der Photodetektorzeile enthaltenen Detektorelemente handeln (ggf. werden Elemente am Rand der Zeile nicht benutzt). Beispielsweise detektiert das jeweilige Detektorelement nur einen Messwert Di eines bestimmten Wertdokumentbereichs oder aber mehrere Messwerte $D_i$, etwa im Rahmen eines Abscannens des Wertdokuments entlang der Transportrichtung. Das Einschalten der Lichtquellen und das Aufnehmen der Messwerte des Wertdokuments wird z.B. durch die Steuereinrichtung des optischen Sensors veranlasst, die die Lichtquellen bzw. die Detektorelemente entsprechend ansteuert. Der jeweilige Messwert kann gleichzeitig zur Beleuchtung detektiert werden (im Fall einer Remissionsmessung oder Transmissionsmessung) oder nach Ende eines Beleuchtungspulses der Lichtquellen (im Fall einer Lumineszenzmessung). Die aufgenommenen Messwerte $D_i$ ($i=1...K$) werden mit Hilfe der zum Zeitpunkt des Selbsttests von den Monitorelementen detektierten Lichtintensitäten $MS_j$ ($j=1...N$) korrigiert, um eine im Laufe der Betriebsdauer der Lichtquellen auftretende Veränderung der von den Lichtquellen emittierten Lichtintensität zu berücksichtigen, insbesondere nachträglich herauszurechnen. Die Messwerte $D_i$ des jeweiligen Detektorelements werden bei dem Korrigieren jeweils mit einem Korrekturfaktor $FK_i$ korrigiert, insbesondere multipliziert, der individuell für das jeweilige Detektorelement berechnet wird, und zwar anhand der zum Zeitpunkt des Selbsttests von mehreren der Monitorelemente detektierten Lichtintensitäten $MS_j$, z.B. anhand der zum Zeitpunkt des Selbsttests von mindestens zwei der Monitorelemente detektierten Lichtintensitäten $MS_j$. Anhand der mit Hilfe des jeweiligen Korrekturfaktors $FK_i$ korrigierten Messwerte $D_i^*$ wird das jeweilige Wertdokument geprüft.

Das Berechnen der korrigierten Messwerte $D_i^*$ ($i=1...K$) und das Prüfen des Wertdokuments wird durch eine Auswerteeinrichtung durchgeführt. Die Auswerteeinrichtung ist mit der Photodetektorzeile bzw. den Detektorelementen verbunden, um die detektierten Messwerte $D_i$ (und ggf. Messwerte $DA_i$ eines Abgleichmediums, siehe unten) des Wertdokuments zu empfangen. Die Auswerteeinrichtung kann das Ergebnis der Wertdokumentprüfung an einen Bediener und/oder an eine Wertdokumentbearbeitungsvorrichtung ausgeben, in die der optische Sensor eingebaut ist.

Das Korrigieren der Messwerte $D_i$ des Wertdokuments mit Hilfe der zum Zeitpunkt des Selbsttests von den Monitorelementen detektierten Lichtintensitäten $MS_j$ ($j=1...N$) wird durchgeführt, um eine im Laufe der Betriebsdauer der Lichtquellen auftretende Veränderung der von den Lichtquellen emittierten Lichtintensität zu korrigieren bzw. nachträglich aus den detektierten Messwerten herauszurechnen. Dadurch dass mehrere Monitorelemente verwendet werden, die verschiedenen Lichtquellen zugeordnet sind, wird erreicht, dass bei dem Selbsttest jeweils die emittierte Lichtintensität der einzelnen Lichtquellen individuell erfasst wird. Durch die Korrektur der Messwerte des Wertdokuments mit Hilfe der zum Zeitpunkt des Selbsttests von den Monitorelementen detektierten Lichtintensitäten $MS_j$ ($j=1...N$) lässt sich daher auch berücksichtigen, wenn sich die emittierte Lichtintensität der verschiedenen Lichtquellen unterschiedlich entwickelt.

Beispielsweise wird bei dem Selbsttest eine Korrekturtabelle erstellt, in welche die für die Detektorelemente der Photodetektorzeile individuell berechneten Korrekturfaktoren $FK_i$ eingetragen sind. Der Korrekturfaktor $FK_i$ kann für jedes Detektorelement der Photodetektorzeile berechnet werden oder nur für diejenigen Detektorelemente, die tatsächlich das von dem geprüften Wertdokuments ausgehende Licht erfassen. Im letzteren Fall wird z.B. für diejenigen Detektorelemente, die am Rand der Photodetektorzeile liegen, auf eine Berechnung der Korrekturfaktoren verzichtet.

Insbesondere wird der Korrekturfaktor $FK_i$ individuell für das jeweilige i-te Detektorelement anhand der zum Zeitpunkt des Selbsttests von den Monitorelementen detektierten Lichtintensitäten $MS_j$ ($j=1...N$) berechnet, jeweils unter Berücksichtigung eines Anteilsfaktors $A_{ij}$, der angibt, welcher Anteil der von der jeweiligen j-ten Lichtquelle ($j=1...N$) emittierten Lichtintensität aufgrund des optischen Strahlengangs zwischen den Lichtquellen und den Detektorelementen auf das jeweilige i-te Detektorelement ($i=1...K$) trifft. Die jeweilige zum Zeitpunkt des Selbsttests von den Monitorelementen detektierten Lichtintensitäten $MS_j$ ($j=1...N$) werden jeweils limitiert durch den Anteilsfaktor $A_{ij}$ ($j=1...N$) in den jeweiligen i-ten Korrekturfaktor $FK_i$ ($i=1...K$) eingerechnet. Zur Berechnung des jeweiligen Korrekturfaktors $FK_i$ für mehrere oder alle der N Lichtquellen werden die jeweiligen Anteilsfaktoren $A_{ij}$ mit den jeweiligen zum Zeitpunkt des Selbsttests von den Monitorelementen detektierten Lichtintensitäten $MS_j$ ($j=1...N$) multipliziert.

Beispielsweise können die Anteilsfaktoren $A_{ij}$ vor der Wertdokumentprüfung empirisch bestimmt werden. Insbesondere wird dazu eine Referenzfläche (z.B. ein Abgleichmedium mit homogenen optische Eigenschaften) an Stelle des Wertdokuments in den Erfassungsbereich der Detektorelemente platziert, die Lichtquellen einzeln nacheinander eingeschaltet werden, um die Referenzfläche zu beleuchten und jeweils die von der Referenzfläche ausgehende und auf die Detektorelemente treffende Lichtintensität detektiert.

Alternativ können die Anteilsfaktoren $A_{ij}$ vor der Wertdokumentprüfung mittels einer numerischen Simulation anhand eines Modells des optischen Strahlengangs von den N Lichtquellen zu den K Detektorelementen berechnet werden. Die numerische Simulation wird vor der Wertdokumentprüfung, z.B. vom Hersteller des Sensors durchgeführt. Das Ergebnis dieser numerischen Simulation wird dann zur Berechnung der Korrekturfaktoren $FK_i$ für die Messwerte $D_i$ verwendet, die die Detektorelemente von dem jeweiligen Wertdokument aufgenommen haben. Bei der numerischen Simulation des optische Strahlengangs von den N Lichtquellen zu den K Detektorelementen wird z.B. eine Übertragungsmatrix A berechnet, deren Matrixelemente den Anteilsfaktoren $A_{ij}$, (i=1...K, j=1...N) entsprechen. Die Übertragungsmatrix A, insbesondere die den Anteilsfaktoren $A_{ij}$ (i=1...K, j=1...N) entsprechenden Matrixelemente der Übertragungsmatrix A, werden dann zum Korrigieren der Messwerte Di verwendet.

Bei der Berechnung des jeweiligen Korrekturfaktors $FK_i$ des jeweiligen i-ten Detektorelements (i=1...K), werden für mehrere oder alle der N Lichtquellen die Anteilsfaktoren $A_{ij}$ mit den zum Zeitpunkt des Selbsttests von den Monitorelementen detektierten Lichtintensitäten $MS_j$ (j=1...N) multipliziert, um für jedes der K (i=1...K) Detektorelemente jeweils den Korrekturfaktor $FK_i$ zu berechnen, der zum Korrigieren des Messwerts $D_i$ des jeweiligen i-ten Detektorelements verwendet wird.

Bevorzugt wird vor dem Selbsttest des optischen Sensors eine Abgleichprozedur des optischen Sensors durchgeführt, um die einzelnen Detektorelemente des optischen Sensors auf ihre ggf. unterschiedliche Empfindlichkeit zu prüfen. Die Abgleichprozedur wird zu einem früheren, vor dem Selbsttest liegenden Zeitpunkt durchgeführt, z.B. vor der Auslieferung des optischen Sensors durch den Hersteller des optischen Sensors. Zusätzlich oder alternativ kann sie aber auch nach der Auslieferung des optischen Sensors zu einem Kunden, z.B. durch Servicepersonal des Herstellers durchgeführt werden. Bei der Abgleichprozedur wird ein Abgleichmedium mit homogenen optische Eigenschaften in den Erfassungsbereich des optischen Sensors gebracht und die Lichtquellen werden gleichzeitig eingeschaltet, um das Abgleichmedium zu beleuchten. Bei der Abgleichprozedur detektieren die Monitorelemente des optischen Sensors jeweils eine Lichtintensität $MA_j$ (j=1...N), die der von der jeweiligen Lichtquelle bei der Abgleichprozedur emittierten Lichtintensität entspricht. Die Detektorelemente des optischen Sensors detektieren bei der Abgleichprozedur jeweils eine von dem Abgleichmedium ausgehende Lichtintensität $DA_i$ (i=1...K). Insbesondere kann die Steuereinrichtung des optischen Sensors dazu eingerichtet sein, die bei der Abgleichprozedur benötigten Detektionen zu veranlassen, z.B. die Detektion der Lichtintensitäten $MA_j$ (j=1...N) durch die Monitorelemente und/oder die Detektion der Lichtintensität $DA_i$ (i=1...K) durch die Detektorelemente.

Zur Berechnung des jeweiligen Korrekturfaktors $FK_i$ des jeweiligen i-ten Detektorelements (i=1...K), werden dann vorzugsweise auch die Lichtintensitäten $MA_j$ (j=1...N) der Lichtquellen herangezogen, welche die Monitorelemente im Rahmen der Abgleichprozedur detektiert haben. Zu diesen Lichtintensitäten $MA_j$ (j=1...N) werden die zum Zeitpunkt des Selbsttests von den Monitorelementen detektierten Lichtintensitäten $MS_j$ (j=1...N) in Bezug gesetzt, um die Veränderung der Lichtintensität der Lichtquellen seit der Abgleichprozedur quantitativ zu ermitteln.

Zum Korrigieren der Messwerte $D_i$ des Wertdokuments wird der jeweilige Messwert $D_i$ mit dem jeweiligen Korrekturfaktor $FK_i$ (i=1...K) multipliziert. In einem ersten Ausführungsbeispiel werden zur Berechnung des jeweiligen Korrekturfaktors $FK_i$ für mehrere oder alle der N Lichtquellen die jeweiligen Anteilsfaktoren $A_{ij}$ mit den jeweiligen zum Zeitpunkt des Selbsttests von den Monitorelementen detektierten Lichtintensitäten $MS_j$ (j=1...N) multipliziert und die Ergebnisse dieser Multiplikationen aufsummiert, um den jeweiligen Korrekturfaktor $FK_i$ zu berechnen.

In einem zweiten Ausführungsbeispiel werden zur Berechnung des jeweiligen Korrekturfaktors $FK_i$ des jeweiligen i-ten Detektorelements (i=1...K), für mehrere oder alle der N Lichtquellen jeweils das Verhältnis zwischen der von den Monitorelementen zum Zeitpunkt des Selbsttests detektierten Lichtintensität $MS_j$ (j=1...N) und den zu einem früheren Zeitpunkt, insbesondere zum Zeitpunkt der Abgleichprozedur, von den Monitorelementen detektierten Lichtintensität $MA_j$ (j=1...N) gebildet. Das jeweilige Verhältnis $MS_j/MA_j$ wird mit dem jeweiligen Anteilsfaktor $A_{ij}$ (j=1...N) multipliziert und die Ergebnisse dieser Multiplikationen werden aufsummiert, um den jeweiligen Korrekturfaktor $FK_i$ zu berechnen.

Auch die von den Detektorelementen im Rahmen der Abgleichprozedur von dem Abgleichmedium detektierten Lichtintensitäten $DA_i$ können, falls nötig, zum Korrigieren der von dem Wertdokument detektierten Messwerte $D_i$ (i=1...K) verwendet werden, wobei die von dem Wertdokument aufgenommenen Messwerte $D_i$ des jeweiligen Detektorelements mit einem weiteren Korrekturfaktor $F_i$ multipliziert werden, der dem Kehrwert der bei der Abgleichprozedur des optischen Sensors von dem Abgleichmedium mittels des jeweiligen Detektorelements detektierten Lichtintensität $DA_i$ entspricht.

Abgesehen von der Alterung der Lichtquellen im Lauf der Betriebsdauer kann bei dem Korrigieren der Messwerte des Wertdokuments auch eine Temperaturabhängigkeit der Monitorelemente korrigiert werden (z.B. eine temperaturabhängige Empfindlichkeit). Zum Beispiel kann mit Hilfe eines in den optischen Sensor eingebauten Temperatursensors eine Temperatur der Monitorelemente zum Zeitpunkt des Selbsttests und ggf. auch eine Temperatur der Monitorelemente zum Zeitpunkt des Abgleichprozedur gemessen werden. Zur Korrektur der Temperaturabhängigkeit der der Monitorelemente können die zum Zeitpunkt des Selbsttest von den Monitorelementen detektierten Lichtintensitäten MS mit einem temperaturabhängigen Faktor multipliziert werden, der anhand der Temperatur der Monitorelemente zum Zeitpunkt des Selbsttests bestimmt wird. Analog können die zum Zeitpunkt der Abgleichprozedur von den Monitorelementen detektierten Lichtintensitäten MA mit einem temperaturabhängigen Faktor multipliziert werden, der anhand der Temperatur der Monitorelemente zum Zeitpunkt der Abgleichprozedur ermittelt wird.

Die Wertdokumente, die mit dem erfindungsgemäßen Verfahren geprüft werden, sind beispielsweise Banknoten, Tickets, Gutscheine, etc..

Nachfolgend wird die Erfindung anhand der begleitenden Zeichnungen beispielhaft beschrieben. Es zeigen:

Fig. 1  Aufbau eines optischen Sensors zur Prüfung der Wertdokumente,

Fig. 2  Schematische Skizze zur Verteilung des von den Lichtquellen emittierten Beleuchtungslichts in der Wertdokumentebene,

Fig. 3  Graustufendarstellung der mit der Übertragungsmatrix bestimmten Anteilsfaktoren $A_{ij}$,

Fig. 4  von den Monitorelementen detektierte Lichtintensitäten zum Zeitpunkt der Abgleichprozedur ($MA_j$) und zum Zeitpunkt des Selbsttests ($MS_j$),

Fig. 5  für die $i=1...K$ Detektorelemente berechnete Korrekturfaktoren $FK_i$,

Fig. 6  von den $i=1...K$ Detektorelementen aufgenommene Messwerte $D_i$ eines Wertdokuments und korrigierte Messwerte $D_i^* = FK_i \cdot D_i$.

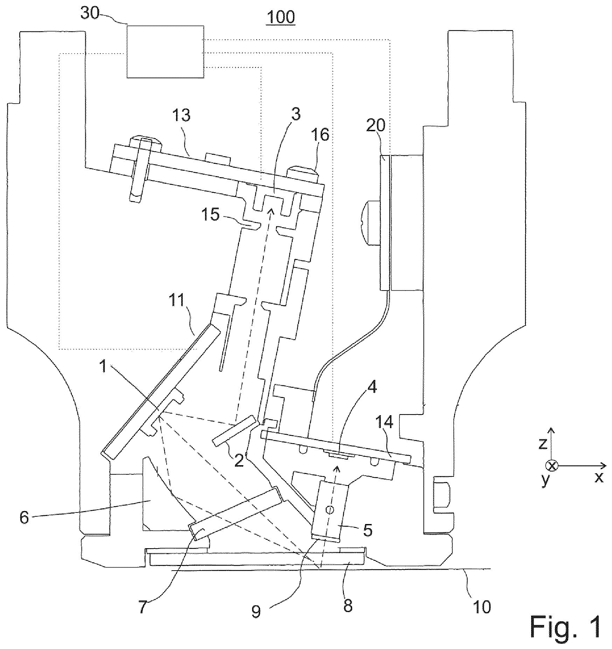

In Figur 1 ist der Aufbau eines zur Wertdokumentprüfung eingerichteten optischen Sensors 100 gezeigt, der z.B. in einer Wertdokumentbearbeitungsvorrichtung eingebaut sein kann. Zur Beleuchtung eines in den Erfassungsbereich des optischen Sensors 100 eingebrachten Wertdokuments 10 wird eine Lichtquellenzeile verwendet, die mehrere, entlang der y-Richtung nebeneinander auf einer Lichtquellen-Aufnahme 11 angeordnete Lichtquellen 1 aufweist, beispielsweise N=12 Lichtquellen. Die Lichtquellen 1 sind z.B. UV-LEDs, die zur Lumineszenzanregung des Wertdokuments geeignet sind. Das von den Lichtquellen 1 emittierte Licht wird über einen Spiegel 2 auf photoempfindliche Monitorelemente 3 (z.B. Photodioden) gerichtet, mittels derer die von den Lichtquellen 1 emittierte Lichtintensität überprüft werden kann, die im Lauf der Betriebsdauer der Lichtquellen üblicherweise abnimmt. Für jede der N Lichtquellen 1 ist genau ein Monitorelement 3 vorhanden (z.B. N=12 Monitorelemente). Durch Blenden 15 wird erreicht, dass jeweils ein Monitorelement 3 nur das Licht genau einer der Lichtquellen 1 erfasst: das Monitorelement $3_1$ erfasst das Licht der Lichtquelle $1_1$, das Monitorelement $3_2$ erfasst das Licht der Lichtquelle $1_2$, usw.. Die Monitorelemente 3 sind auf einer Monitoraufnahme 13 befestigt.

Alternativ zur Reflexion an einem Spiegel 2 könnten die Monitorelemente 3 auch so im Abstrahlbereich der jeweiligen Lichtquelle 1 angeordnet sein, dass sie einen Teil des von den Lichtquellen emittierten Lichts direkt erfassen. Oder zwischen den Lichtquellen und dem Wertdokument könnte ein teildurchlässiger Spiegel angeordnet werden, der den größten Teil des Beleuchtungslichts durchlässt und einen Teil des Beleuchtungslichts auf die Monitorelemente reflektiert. Alternativ könnten die Monitorelemente auch das an einer Referenzfläche zurückgestreute Beleuchtungslicht der Lichtquellen detektieren.

Das von den Lichtquellen 1 emittierte Licht wird teils direkt, teils über einen elliptischen Spiegel 6 auf das zu prüfende Wertdokument 10 gerichtet und wird dabei durch das Messfenster 8 des optischen Sensors 100 und durch einen spektralen Filter 7 transmittiert, der den visuell sichtbaren Anteil des Beleuchtungslichts blockiert. Zusätzlich könnte auch ein weiterer solcher spektraler Filter im Strahlengang vor den Monitorelementen 3 vorgesehen sein, um auch hier den visuell sichtbaren Anteil des Beleuchtungslichts zu blockieren. Der spektrale Filter 7 könnte alternativ auch unmittelbar nach den Lichtquellen angeordnet werden, um sowohl das auf das Wertdokument als auch das auf die Monitorelemente 3 treffende Licht spektral zu filtern.

Das von dem Wertdokument 10 ausgehende Lumineszenzlicht wird durch ein Zeile aus mit einem UV-blockierenden Filter versehenen Selfoc-Linsen 5 auf mehrere Detektorelemente 4 einer Photodetektorzeile abgebildet, die entlang der y-Richtung nebeneinander auf einer Detektorelement-Aufnahme 14 angeordnet sind und z.B. K=112 Detektorelemente aufweist. Es kann nur eine einzige Photodetektorzeile verwendet werden, auf die das Lumineszenzlicht abgebildet wird. Das Lumineszenzlicht kann mit Hilfe weiterer Linsen auch auf mehrere, entlang der x-Richtung zueinander versetzte Photodetektorzeilen abgebildet werden, die verschiedene Spektralbereiche des Lumineszenzlichts erfassen und entsprechende Spektralfilter aufweisen. Alternativ können auch mehrere Photodetektorzeilen eines zweidimensionalen Bildsensors verwendet werden, auf den das von dem Wertdokument ausgehende Licht abgebildet werden kann.

Zu seiner Prüfung kann das Wertdokument 10 statisch in den Erfassungsbereich des optischen Sensors 100 eingebracht sein. Bevorzugt wird das Wertdokument jedoch entlang der x-Richtung an dem optischen Sensor vorbeitransportiert, um die verschiedenen Wertdokumentabschnitte nacheinander mit dem optischen Sensor abzutasten. Das Vorbeitransportieren wird z.B. mittels entsprechender Transportmittel, z.B. Transportriemen und/oder Transportrollen erreicht, die in einer Wertdokumentbearbeitungsvorrichtung zum Transportieren der Wertdokumente verwendet werden.

Eine Steuereinrichtung 30 des optischen Sensors 100 ist mit den Lichtquellen 1, den Monitorelementen 3 und den Detektorelementen 4 verbunden und weist eine entsprechende Hardware und Software auf, die dafür sorgt, dass die Lichtquellen 1 gleichzeitig eingeschaltet werden und die Detektorelemente 4, gleichzeitig und/oder nach der Beleuchtung, zum Erfassen von Lumineszenz-Messwerten $D_i$ des Wertdokuments 10 veranlasst werden. Die von den Detektorelementen 4 erfassten Messwerte $D_i$ (i=1...K) des Wertdokuments werden zu einer mit den Detektorelementen verbundenen Auswerteeinrichtung 20 übertragen.

Die Steuereinrichtung 30 ist zur Durchführung eines Selbsttests des optischen Sensors eingerichtet. Der Selbsttest kann zu einem Zeitpunkt unmittelbar vor der Prüfung der Wertdokumente durchgeführt werden, z.B. beim Starten der Wertdokumentbearbeitungsvorrichtung oder in der Lücke zwischen zwei an dem Sensor vorbeitransportierten, zu prüfenden Wertdokumenten. Bei dem Selbsttest veranlasst die Steuereinrichtung, dass die N Lichtquellen 1 gleichzeitig eingeschaltet werden und mit Hilfe der N Monitorelemente 3 die jeweilige Lichtintensität $MS_j$ (j=1...N) der dem jeweiligen Monitorelement zugeordneten Lichtquelle 1 detektiert wird. Beispielsweise werden bei dem Selbsttest die zum Zeitpunkt des Selbsttests von den Monitorelementen detektierten Lichtintensitäten $MS_j$ (j=1...N) dahingehend überprüft, ob sie einen bestimmten Schwellenwert übersteigen, der zur Beleuchtung des Wertdokuments, z.B. zur optischen Anregung einer messbaren Lumineszenz, notwendig ist. Die Steuereinrichtung 30 ist außerdem mit der Auswerteeinrichtung 20 verbunden, um die zum Zeitpunkt des Selbsttests von den Monitorelementen detektierten Lichtintensitäten $MS_j$ (j=1...N) an die Auswerteeinrichtung 20 zu übermitteln, sowie ggf. auch die bei der Abgleichprozedur von den Monitorelementen detektierten Lichtintensitäten $MA_j$ (j=1...N) eines Abgleichmediums.

Die Auswerteeinrichtung 20 korrigiert die Messwerte $D_i$ des jeweiligen Wertdokuments mit Hilfe von Korrekturfaktoren $FK_i$, in welche die zum Zeitpunkt des Selbsttests von den Monitorelementen 3 detektierten Lichtintensitäten $MS_j$ (j=1...N) eingehen, um korrigierte Messwerte

$$D_i^* = FK_i \cdot D_i \ \ (i=1...K) \qquad (1)$$

zu berechnen. Anschließend prüft die Auswerteeinrichtung 20 das Wertdokument mittels der korrigierten Messwerte $D_i^*$, z.B. dessen Echtheit, Zustand oder die Art des Wertdokuments. Zur Prüfung des Wertdokuments werden die korrigierten Messwerte $D_i^*$ z.B. mit mindestens einem Referenzwert verglichen, der für das jeweilige Wertdokument bzw. den jeweiligen Abschnitt des Wertdokuments erwartet wird. Die korrigierten Messwerte können dabei auch über einen Abschnitt (Region of Interest, ROI) des Wertdokuments zusammengefasst, z.B. gemittelt werden, bevor der Vergleich mit dem jeweiligen Referenzwert durchgeführt wird.

Bei der Herstellung des optischen Sensors werden bevorzugt N möglichst gleiche Lichtquellen ausgewählt, die sich in ihrer emittierten Lichtintensität kaum unterscheiden, und die Photodetektorzeile wird bevorzugt so ausgewählt, dass sich die Empfindlichkeiten der einzelnen Detektorelemente kaum unterscheiden. In diesem Fall ist eine Korrektur der Messwerte $D_i$ allein mit Hilfe der Faktoren $FK_i$ gemäß Formel (1) bevorzugt.

Andernfalls, wenn es bei der Herstellung des optischen Sensors unvermeidlich ist, dass die einzelnen Lichtquellen bzw. die einzelnen Detektorelemente unterschiedlich sind, wird vor der Auslieferung des optischen Sensors, vom Hersteller des Sensors bevorzugt eine Abgleichprozedur des optischen Sensors durchgeführt, bei der die ggf. unterschiedlichen Emissionsintensitäten der Lichtquellen und die ggf. unterschiedlichen Empfindlichkeiten der Detektorelemente geprüft und quantitativ bestimmt werden. Bei der Abgleichprozedur wird ein Abgleichmedium mit homogenen optischen Eigenschaften, z.B. einer homogen weißen Fläche, in den Erfassungsbereich des optischen Sensors 100 gebracht. Dann werden die N Lichtquellen 1 gleichzeitig eingeschaltet, um das Abgleichmedium zu beleuchten und mittels der Detektorelemente 4 des optischen Sensors wird die von dem Abgleichmedium ausgehende, reflektierte Lichtintensität $DA_i$ (i=1...K) detektiert.

Falls sich bei der Abgleichprozedur herausstellt, dass die einzelnen Lichtquellen 1 bzw. die einzelnen Detektorelemente 4 tatsächlich deutlich unterschiedlich sind, werden die Messwerte $D_i$ der Wertdokumente einer weiteren Korrektur mittels eines weiteren Korrekturfaktors $F_i$ unterzogen, der ebenfalls mit den Messwerten $D_i$ multipliziert wird:

$$D_i^* = F_i \cdot FK_i \cdot D_i \qquad (2)$$

Der weitere Korrekturfaktor $F_i$ ergibt sich aus den bei der Abgleichprozedur von dem Abgleichmedium erfassten Messwerten der Detektorelemente $DA_i$ gemäß der Formel

$$F_i = c/DA_i \qquad (3)$$

wobei für c ein fester Zahlenwert angenommen wird.

Bei der Abgleichprozedur werden außerdem mit Hilfe der Monitorelemente 3 die von den N Lichtquellen 1 emittierte und auf die N Monitorelemente 3 treffenden Lichtintensitäten $MA_j$ (j=1...N) detektiert. Diese werden bei der Bestimmung des Korrekturfaktors $FK_i$ als Bezugswerte für die beim Selbsttest von den N Lichtquellen 1 emittierte und auf die N Monitorelemente 3 treffenden Lichtintensitäten $MS_j$ (j=1...N) verwendet.

Die Abgleichprozedur kann bei Bedarf auch nach Auslieferung des optischen Sensors von Zeit zu Zeit wiederholt werden (z.B. monatlich oder halbjährig), um die Veränderung der Lichtintensität der Lichtquellen im Lauf der Betriebsdauer zu erfassen. Da die Abgleichprozedur jedoch aufwändig ist (Einsatz von Servicepersonal), ist es vorteilhaft, an Stelle einer häufigen Wiederholung der Abgleichprozedur, als alternative Möglichkeit einen Selbsttest des optischen Sensors zu nutzen, um die Veränderung der Lichtintensität der Lichtquellen im Lauf der Betriebsdauer zu erfassen. Bei den Selbsttests des optischen Sensors werden regelmäßig (z.B. vor jedem Starten der Wertdokumentbearbeitungsvorrichtung) die auf die Monitorelemente 3 treffenden Lichtintensitäten $MS_j$ (j=1...N) der Lichtquellen 1 detektiert. Da der Selbsttest zeitnah zur Wertdokumentprüfung durchgeführt wird, entspricht die bei dem jeweiligen Selbsttest festgestellte Lichtintensität der jeweiligen Lichtquelle ziemlich genau der bei der Wertdokumentprüfung vorliegenden Lichtintensität der jeweiligen Lichtquelle 1.

Im Folgenden wird die Bestimmung der Korrekturfaktoren $FK_i$ für die K Detektorelemente (i=1...K) mit Hilfe der zum Zeitpunkt des Selbsttests von den Monitorelementen 3 detektierten Lichtintensitäten $MS_j$ (j=1...N) beschrieben. Die Korrekturfaktoren können im Rahmen des Selbsttests, z.B. unmittelbar vor der Prüfung der Wertdokumente bestimmt werden.

Zur Bestimmung der Korrekturfaktoren $FK_i$ für die K Detektorelemente (i=1...K) wird individuell für jedes Detektorelement 4 bestimmt, welcher Anteil der von der jeweiligen j-ten Lichtquelle (j=1...N) emittierten Lichtintensität - in Anbetracht des optischen Strahlengangs zwischen den Lichtquellen und den Detektorelementen - auf das jeweilige i-te Detektorelement (i=1...K) trifft. Jeder dieser Anteile wird durch einen Anteilsfaktor $A_{ij}$ repräsentiert.

In den Anteilsfaktor $A_{ij}$, j=1...N geht z.B. die Lage der jeweilige j-ten Lichtquelle entlang der Lichtquellenzeile und die Lage des jeweiligen i-ten Detektorelements entlang der Photodetektorzeile bzw. deren relative Lage bzw. deren Abstand entlang der Zeilenrichtung (y-Richtung) ein, sowie die Abstrahlwinkel der Lichtquellen (für alle Lichtquellen etwa gleich), die Empfangswinkel der Detektorelemente (für alle Detektorelemente etwa gleich) und der Abstand der Lichtquellen 1 und der Detektorelemente 4 von der Wertdokumentebene eines in den Erfassungsbereich des optischen Sensors eingebrachten Wertdokuments.

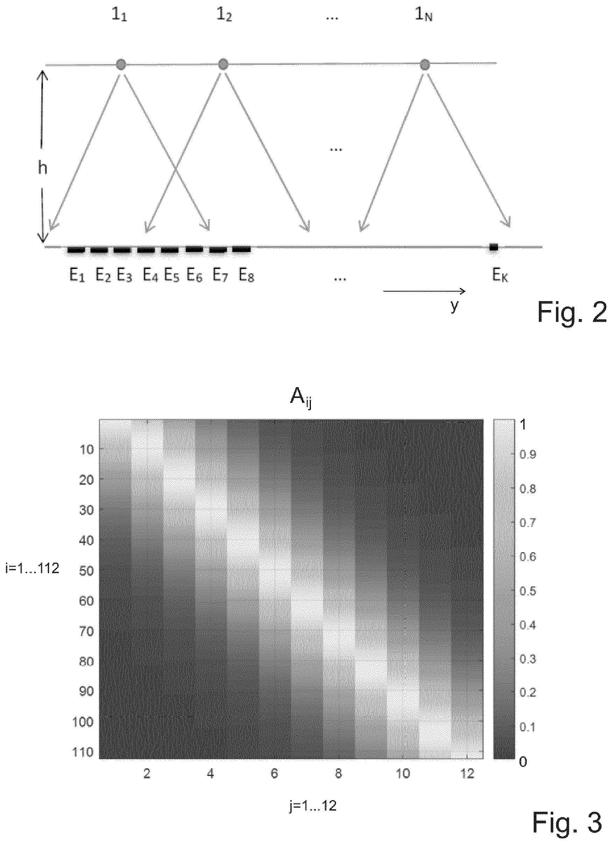

Fig. 2 zeigt ein Beispiel für die Verteilung des von den Lichtquellen $1_1, 1_2, ..., 1_N$ emittierten Beleuchtungslichts. In der Wertdokumentebene sind schematisch die Erfassungsbereiche $E_1, E_2, ..., E_K$ der einzelnen Detektorelemente (i=1...K) eingezeichnet, die sich durch die optische Abbildung mittels der Zeile aus Selfoc-Linsen 5 ergeben. Man erkennt, dass der Lichtbeitrag, den eine am linken Rand der Lichtquellenzeile angeordnete Lichtquelle (z.B. die Lichtquelle $1_1$) auf die Erfassungsbereiche (z.B. $E_1, E_2, E_3$) der am linken Rand der Photodetektorzeile liegenden Detektorelemente 4 strahlt, sehr viel größer ist als deren Lichtbeitrag auf den Erfassungsbereich (z.B. $E_K$) eines am rechten Rand der Photodetektorzeile liegenden Detektorelements 4. Entsprechend groß sind die Anteilsfaktoren $A_{11}, A_{21}, A_{31}$ der Lichtquelle $1_1$ auf die am linken Rand der Photodetektorzeile liegenden Detektorelemente im Vergleich zu deren Anteilsfaktor $A_{K1}$ auf das am rechten Rand der Photodetektorzeile liegende Detektorelement.

Die Anteilsfaktoren $A_{ij}$ können quantitativ mittels einer numerischen Simulation anhand eines Modells des optischen Strahlengangs berechnet werden, in welchem der optische Strahlengang von den N Lichtquellen des optischen Sensors zu den K Detektorelementen des optischen Sensors modelliert wird.

Für die optische Simulation wird im Fall des optischen Sensors 100 z.B. angenommen, dass die Lichtquellen eine Lambertsche Abstrahlung haben, der Abstand h der Lichtquellen 1 von der Wertdokumentebene 30 mm beträgt, die Lichtquellen 1 voneinander einen Abstand von 10,5 mm haben und die Detektorelemente 4 voneinander einen Abstand von 1 mm (in y-Richtung). Bei der numerischen Simulation wird z.B. eine Übertragungsmatrix A berechnet, deren Matrixelemente die Anteilsfaktoren $A_{ij}$, (i=1...K, j=1...N) sind.

In Fig. 3 sind die Anteilsfaktoren $A_{ij}$, die durch die numerische Simulation des optischen Strahlengangs des optischen Sensors 100 berechnet wurden, in Form von Graustufenwerten dargestellt. Dabei sind die Anteilsfaktoren $A_{ij}$, für die N=12 (j=1...12) Lichtquellen von links nach rechts und für die K=112 Detektorelemente (i=1...112) von oben nach unten dargestellt. Wie nach der obigen Beschreibung zu Fig. 2 zu erwarten, ergeben sich die größten Anteilsfaktoren $A_{ij}$ in der "Diagonale" der Fig. 3. Alternativ zur numerischen Simulation des optischen Strahlengangs können die Anteilsfaktoren $A_{ij}$ auch durch Messung der einzelnen von den Lichtquellen emittierten und auf das jeweilige Detektorelement treffenden Lichtintensität bestimmt werden.

Die Beleuchtungsintensität $B_i$, die für das jeweilige i-te Detektorelement (i=1...K) maßgeblich ist, ergibt sich im Allgemeinen durch Aufsummieren der von den Lichtquellen emittierten Lichtintensitäten $L_j$ (j=1...N), jeweils gewichtet durch den Anteilsfaktor $A_{ij}$, zu

$$B_i = \sum_{j=1}^{N} A_{ij} \cdot L_j \qquad (4)$$

und in Matrixschreibweise

$$\begin{pmatrix} B_1 \\ B_2 \\ \cdots \\ B_K \end{pmatrix} = \begin{pmatrix} A_{1,1} & \cdots & A_{1,N} \\ \vdots & \ddots & \vdots \\ A_{K,1} & \cdots & A_{K,N} \end{pmatrix} \cdot \begin{pmatrix} L_1 \\ L_2 \\ \cdots \\ L_N \end{pmatrix}. \qquad (5)$$

Unter der Annahme, dass die Monitorelemente jeweils nur einen bestimmten, festen Anteil 1/ β der von den Lichtquellen emittierten Lichtintensität detektieren, kann die von den Lichtquellen emittierte Lichtintensität $L_j$ j=1...N) aus den im Selbsttest von den Monitorelementen detektierten Lichtintensitäten $MS_j$ berechnet werden durch $L_j = \beta \cdot MS_j$. Zum Zeitpunkt der Abgleichprozedur wird entsprechend $L_j = \beta \cdot MA_j$ angenommen.

Für den Zeitpunkt des Selbsttests ergibt sich die für das jeweilige i-te Detektorelement (i=1...K) maßgebliche Beleuchtungsintensität $BS_i$ durch Aufsummieren der von den Monitorelementen beim Selbsttest detektierten Lichtintensitäten $MS_j$ (j=1...N), jeweils gewichtet durch den Anteilsfaktor $A_{ij}$, zu

$$BS_i = \sum_{j=1}^{N} A_{ij} \cdot \beta \cdot MS_j \qquad (6)$$

und für den Zeitpunkt der Abgleichprozedur ergibt sich entsprechend

$$BA_i = \sum_{j=1}^{N} A_{ij} \cdot \beta \cdot MA_j . \qquad (7)$$

In einem ersten Ausführungsbeispiel werden die Korrekturfaktoren $FK_i$ der einzelnen Detektorelemente (i=1...K) aus den beiden Beleuchtungsintensitäten $BS_i$ und $BA_i$ nach der folgenden Formel berechnet:

$$FK_i = \frac{BA_i}{BS_i} = \frac{\sum_{j=1}^{N} A_{ij} \cdot MA_j}{\sum_{j=1}^{N} A_{ij} \cdot MS_j} , \quad \text{wobei i=1...K, j=1...N.} \qquad (8)$$

Der jeweilige Korrekturfaktor $FK_i$ ergibt sich demzufolge aus dem Quotienten der bei der Abgleichprozedur vorliegenden Beleuchtungsintensität $BA_i = \sum_{j=1}^{N} A_{ij} \cdot MA_j$ und der beim Selbsttest vorliegenden Beleuchtungsintensität $BS_i = \sum_{j=1}^{N} A_{ij} \cdot MS_j$. Die Berechnung der Korrekturfaktoren $FK_i$ gemäß Formel (8) ist eine Näherung, bei der vereinfachend angenommen wird, dass alle Monitorelemente dieselbe Empfindlichkeit haben und die optische Abbildung auf jedes der Monitorelemente gleich ist.

In einem zweiten Ausführungsbeispiel werden die Korrekturfaktoren $FK_i$ der einzelnen Detektorelemente (i=1...K) nach der folgenden Formel berechnet:

$$FK_i = \frac{\sum_{j=1}^{N} A_{ij}}{\sum_{j=1}^{N} A_{ij} \cdot \frac{MS_j}{MA_j}} , \quad \text{wobei i=1...K, j=1...N.} \qquad (9)$$

Die Berechnung der Korrekturfaktoren $FK_i$ gemäß Formel (9) ist ebenfalls eine Näherung, wobei angenommen wird, dass die Lichtquellen 1 zum Zeitpunkt der Abgleichprozedur etwa dieselbe Lichtintensität emittieren.

Die Korrekturfaktoren $FK_i$ können entweder durch die Steuereinrichtung im Rahmen des Selbsttests berechnet und von dieser an die Auswerteeinrichtung 20 weitergeleitet werden. Die Korrekturfaktoren $FK_i$ können aber auch erst durch die Auswerteeinrichtung berechnet werden, die die jeweiligen beim Selbsttest detektierten Lichtintensitäten $MS_j$ (j=1...N) von der Steuereinrichtung empfängt. Nachdem die Korrekturfaktoren $FK_i$ gemäß Formel (8) bzw. (9) aus den bei der Abgleichprozedur und den beim Selbsttest detektieren Beleuchtungsintensitäten $MS_j$ und $MA_j$ (j=1...N) unter Verwendung der in Fig. 3 gezeigten Anteilsfaktoren $A_{ij}$ bestimmt wurden, kann die Auswerteeinrichtung 20 eine Korrektur der Messwerte $D_i$ (i=1...K) eines Wertdokuments gemäß Formel (1) durchführen.

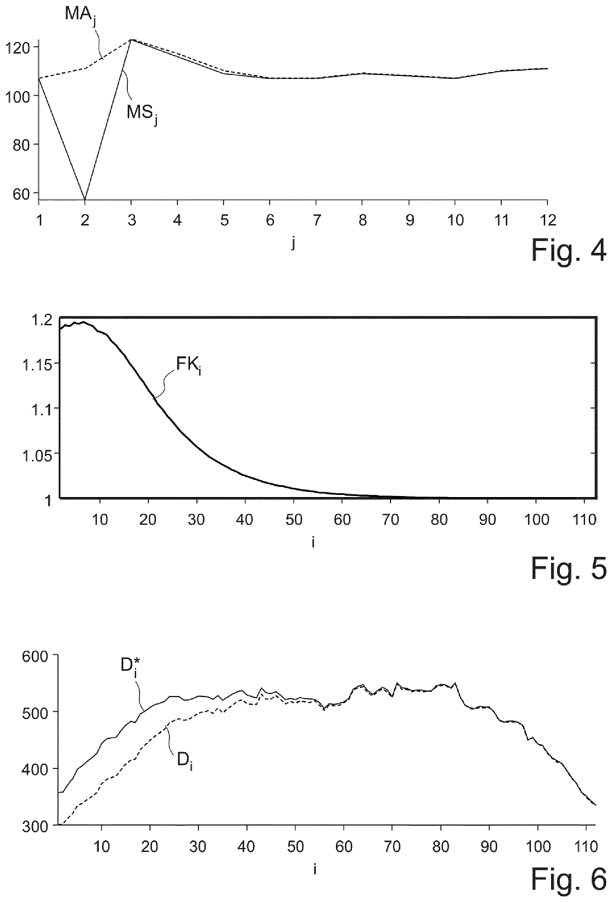

Als Beispiel sind in Fig. 4 die von den N=12 Monitorelementen 3 bei der Abgleichprozedur und den bei einem Selbsttest des optischen Sensors detektieren Beleuchtungsintensitäten $MS_j$ und $MA_j$ (j=1...N) für alle N=12 Lichtquellen 1 dargestellt. Bei dem Selbsttest wurde eine stark reduzierte Lichtintensität der zweiten Lichtquelle (j=2) festgestellt, die im Vergleich zu der früher bei der Abgleichprozedur gemessenen Lichtintensität um etwa die Hälfte reduziert ist. Aus diesen Werten für $MS_j$ und $MA_j$ (j=1...N) ergeben sich (unter Verwendung der in Fig. 3 gezeigten Anteilsfaktoren $A_{ij}$) aus Formel (8) bzw. (9) die in Fig. 5 dargestellten Korrekturfaktoren $FK_i$ für alle K=112 Detektorelemente 4.

Mit den Korrekturfaktoren $FK_i$ aus Fig. 5 werden die von den einzelnen Detektorelementen 4 erfassten

Messwerte $D_i$ des Wertdokument (vgl. Fig. 6) gemäß Formel (1) korrigiert, z.B. multipliziert, um die im Lauf der Betriebsdauer veränderte Lichtintensität, insbesondere die seit der Abgleichprozedur stark reduzierte Lichtintensität der zweiten Lichtquelle, aus den detektierten Messwerten herauszurechnen. Fig. 6 zeigt die im betrachteten Beispiel korrigierten Messwerte $D_i^* = FK_i \cdot D_i$. Bei den Detektorelementen i=1 bis etwa i=45 ergibt sich dadurch eine deutliche Korrektur der Messwerte $D_i$ nach oben.

Neben der Alterung der Lichtquellen 1 im Lauf der Betriebsdauer kann bei Bedarf auch die Temperaturabhängigkeit der Monitorelemente 3 korrigiert werden. Dazu wird mit Hilfe eines in der Nähe der Monitorelemente 3 (z.B. auf der Monitoraufnahme 13) eingebauten Temperatursensors 16 die Temperatur der Monitorelemente zum Zeitpunkt des Selbsttests $T_S$ gemessen und bei der Korrektur der Messwerte $D_i$ berücksichtigt. Falls die Temperatur der Monitorelemente zum Zeitpunkt einer beim Hersteller des Sensors durchgeführten Abgleichprozedur immer etwa gleich ist, ist eine Berücksichtigung der zum Zeitpunkt der Abgleichprozedur gemessenen Temperatur nicht notwendig. Andernfalls, wenn eine Abgleichprozedur unter stark veränderter Temperatur der Monitorelemente erfolgt, wird bevorzugt auch die bei der Abgleichprozedur gemessene Temperatur der Monitorelemente $T_A$ im optischen Sensor hinterlegt und bei der Korrektur der Messwerte $D_i$ berücksichtigt.

Beispielsweise kann in der Auswerteeinrichtung 20 des optischen Sensors eine Tabelle abgespeichert sein, in der verschiedenen Temperaturen T der Monitorelemente jeweils ein Korrekturfaktor t als Funktion der Temperatur T zugeordnet ist. Zur Korrektur der Temperaturabhängigkeit der Monitorelemente 3 werden in den Gleichungen (8) oder (9) dann die zum Zeitpunkt des Selbsttests von den Monitorelementen detektierten Lichtintensitäten $MS_j$ ersetzt durch $MS_j' = t(T_S) \cdot MS_j$, wobei sich $t(T_S)$ aus der beim Selbsttest gemessenen Temperatur $T_S$ gemäß der oben genannten Tabelle ergibt. Es wird angenommen, dass die Korrekturfaktoren $t(T_S)$ für alle Monitorelemente 3 etwa gleich sind. Analog können auch die zum Zeitpunkt der Abgleichprozedur von den Monitorelementen detektierten Lichtintensitäten $MA_j$ ersetzt werden durch $MA_j' = t(T_A) \cdot MA_j$, wobei sich $t(T_A)$ aus der bei der Abgleichprozedur gemessenen Temperatur $T_A$ gemäß der oben genannten Tabelle ergibt. Alternativ könnten die von den einzelnen Detektorelementen 4 erfassten Messwerte $D_i$ des Wertdokuments einfach mit einen zusätzlichen Faktor $t(T_A)/t(T_S)$ multipliziert werden.

Darüber hinaus kann beim Selbsttest optional auch noch die Temperaturabhängigkeit der Detektorelemente mit entsprechenden weiteren Temperatursensoren gemessen werden und - sofern die Detektorelemente eine entsprechend große Temperaturabhängigkeit haben - etwaige Temperaturänderungen seit der Abgleichprozedur bei der Korrektur der Messwerte $D_i$ berücksichtigt werden.

## Patentansprüche

1. Verfahren zur Prüfung eines in einen Erfassungsbereich eines optischen Sensors (100) gebrachten Wertdokuments (10), wobei der optische Sensor (100) aufweist:

   - eine Photodetektorzeile, die eine Anzahl K von mehreren nebeneinander angeordneten Detektorelementen (4) aufweist, die dazu ausgebildet sind, jeweils die Intensität des von einem Detektionsbereich des Wertdokuments (10) ausgehenden Lichts zu detektieren,
   - eine Lichtquellenzeile, die eine Anzahl N von mehreren nebeneinander angeordneten Lichtquellen (1) aufweist, die die dazu ausgebildet sind, das Wertdokument (10) zu beleuchten,
   - eine Monitordetektorzeile, die mehrere nebeneinander angeordnete, photoempfindliche Monitorelemente (3) aufweist, wobei jedes Monitorelement einer der Lichtquellen (1) zugeordnet ist und dazu ausgebildet ist, die Intensität des von dieser Lichtquelle emittierten und auf das jeweilige Monitorelement treffenden Lichts zu detektieren,
   - eine Auswerteeinrichtung (20),

   wobei bei dem Verfahren folgende Schritte durchgeführt werden:

   - Durchführen eines Selbsttests des optischen Sensors (100) zu einem Zeitpunkt vor der Prüfung des Wertdokuments (10), wobei bei dem Selbsttest die N Lichtquellen (1) eingeschaltet werden und mit Hilfe der Monitorelemente (3) die jeweilige Lichtintensität $MS_j$ der dem jeweiligen Monitorelement zugeordneten Lichtquelle (1) detektiert wird, die zum Zeitpunkt des Selbsttests auf das jeweilige Monitorelement trifft, um die zum Zeitpunkt des Selbsttests von den Monitorelementen detektierten Lichtintensitäten $MS_j$ zu überprüfen, wobei j=1...N,
   - Einbringen eines Wertdokuments (10) in den Erfassungsbereich des optischen Sensors (100),
   - gleichzeitiges Einschalten der N Lichtquellen (1), um das in den Erfassungsbereich eingebrachte Wertdokument (10) mit dem Licht der Lichtquellen zu beleuchten, und Aufnehmen von Messwerten des jeweiligen Wertdokuments mittels der Detektorelemente (4), wobei die aufgenommenen Messwerte der von dem jeweiligen Wertdokument als Folge der Beleuchtung ausgehenden Lichtintensität entsprechen und wobei die K Detektorelemente (4) der Photodetektorzeile jeweils zumindest einen Messwert $D_i$ des Wertdokuments aufnehmen, wobei i=1...K,

- Korrigieren der Messwerte $D_i$ durch die Auswerteeinrichtung anhand der zum Zeitpunkt des Selbsttests von den Monitorelementen (3) detektierten Lichtintensitäten $MS_j$, wobei der zumindest eine Messwert $D_i$ des jeweiligen Detektorelements (4) bei dem Korrigieren jeweils mit einem Korrekturfaktor $FK_i$ korrigiert wird, der individuell für das jeweilige Detektorelement (4) anhand der zum Zeitpunkt des Selbsttests von mehreren der Monitorelemente (3) detektierten Lichtintensitäten $MS_j$ berechnet wird, und

- Prüfen des Wertdokuments (10) durch die Auswerteeinrichtung anhand der mit Hilfe des jeweiligen Korrekturfaktors $FK_i$ korrigierten Messwerte ($D_i$*).

2. Verfahren nach Anspruch 1, **dadurch gekennzeichnet, dass** die jeweiligen zum Zeitpunkt des Selbsttests von den Monitorelementen (3) detektierten Lichtintensitäten $MS_j$ jeweils limitiert durch einen Anteilsfaktor $A_{ij}$ in den jeweiligen Korrekturfaktor $FK_i$ eingerechnet werden, der angibt, welcher Anteil der von der jeweiligen Lichtquelle emittierten Lichtintensität aufgrund des optischen Strahlengangs von den Lichtquellen bis zu den Detektorelementen auf das jeweilige Detektorelement trifft.

3. Verfahren nach Anspruch 2, **dadurch gekennzeichnet, dass** die Anteilsfaktoren $A_{ij}$ vor der Wertdokumentprüfung empirisch bestimmt werden, z.B. dadurch, dass eine Referenzfläche an Stelle des Wertdokuments in den Erfassungsbereich der Detektorelemente platziert wird, die Lichtquellen einzeln nacheinander eingeschaltet werden, um die Referenzfläche zu beleuchten und jeweils die von der Referenzfläche ausgehende und auf die Detektorelemente treffende Lichtintensität detektiert wird.

4. Verfahren nach einem der Ansprüche 2 oder 3, **dadurch gekennzeichnet, dass** die Anteilsfaktoren $A_{ij}$ vor der Wertdokumentprüfung mittels einer numerischen Simulation anhand eines Modells des optischen Strahlengangs von den N Lichtquellen zu den K Detektorelementen berechnet werden.

5. Verfahren nach Anspruch 4, **dadurch gekennzeichnet, dass** bei der numerischen Simulation des optische Strahlengangs von den N Lichtquellen zu den K Detektorelementen eine Übertragungsmatrix (A) berechnet wird, deren Matrixelemente den Anteilsfaktoren $A_{ij}$, entsprechen, und die Übertragungsmatrix (A), insbesondere die den Anteilsfaktoren $A_{ij}$ entsprechenden Matrixelemente der Übertragungsmatrix A, zum Korrigieren der Messwerte $D_i$ verwendet wird/werden.

6. Verfahren nach einem der Ansprüche 4 bis 5, **dadurch gekennzeichnet, dass** bei der Berechnung des jeweiligen Korrekturfaktors $FK_i$ des jeweiligen Detektorelements, für mehrere oder alle der N Lichtquellen die Anteilsfaktoren $A_{ij}$ mit den zum Zeitpunkt des Selbsttests von den jeweiligen Monitorelementen detektierten Lichtintensitäten $MS_j$ multipliziert werden.

7. Verfahren nach einem der Ansprüche 2 bis 4, **dadurch gekennzeichnet, dass** zur Berechnung des jeweiligen Korrekturfaktors $FK_i$, für mehrere oder alle der N Lichtquellen die jeweiligen Anteilsfaktoren $A_{ij}$ mit den jeweiligen zum Zeitpunkt des Selbsttests von den Monitorelementen detektierten Lichtintensitäten $MS_j$ multipliziert werden und die Ergebnisse dieser Multiplikationen aufsummiert werden, um den jeweiligen Korrekturfaktor $FK_i$ zu berechnen.

8. Verfahren nach Anspruch 7, **dadurch gekennzeichnet, dass** zum Korrigieren der Messwerte $D_i$ des Wertdokuments, der jeweilige Messwert $D_i$ mit dem Korrekturfaktor $FK_i$ multipliziert wird, wobei die Korrekturfaktoren $FK_i$ nach der folgenden Formel berechnet werden:

$$FK_i = \frac{\sum_{j=1}^{N} A_{ij} \cdot MA_j}{\sum_{j=1}^{N} A_{ij} \cdot MS_j}.$$

9. Verfahren nach einem der Ansprüche 2 bis 6, **dadurch gekennzeichnet, dass** zur Berechnung des jeweiligen Korrekturfaktors $FK_i$ des jeweiligen Detektorelements, für mehrere oder alle der N Lichtquellen jeweils das Verhältnis zwischen der von den Monitorelementen zum Zeitpunkt des Selbsttests detektierten Lichtintensität $MS_j$ und den zu einem früheren Zeitpunkt von den Monitorelementen detektierten Lichtintensitäten $MA_j$ gebildet wird, das jeweilige Verhältnis $MS_j/MA_j$ mit dem jeweiligen Anteilsfaktor $A_{ij}$ multipliziert wird und die Ergebnisse dieser Multiplikationen aufsummiert werden, um den jeweiligen Korrekturfaktor $FK_i$ zu berechnen.

10. Verfahren nach Anspruch 9, **dadurch gekennzeichnet, dass** zum Korrigieren der Messwerte $D_i$ des Wertdokuments, der jeweilige Messwert $D_i$ mit dem jeweiligen Korrekturfaktor $FK_i$ multipliziert wird, wobei die Korrekturfaktoren $FK_i$ nach der folgenden Formel berechnet werden:

$$FK_i = \frac{\sum_{j=1}^{N} A_{ij}}{\sum_{j=1}^{N} A_{ij} \cdot \frac{MS_j}{MA_j}} \cdot$$

11. Verfahren nach einem der vorhergehenden Ansprüche, **dadurch gekennzeichnet, dass** vor dem Selbsttest eine Abgleichprozedur durchgeführt wird, bei der ein Abgleichmedium in den Erfassungsbereich des optischen Sensors (100) gebracht wird und die N Lichtquellen (1) eingeschaltet werden, um das Abgleichmedium zu beleuchten, wobei

- die Monitorelemente des optischen Sensors jeweils eine Lichtintensität $MA_j$ detektieren, die der von der jeweiligen Lichtquelle bei der Abgleichprozedur emittierten Lichtintensität entspricht, wobei j=1...N, und/oder
- die Detektorelemente des optischen Sensors jeweils eine von dem Abgleichmedium ausgehende Lichtintensität $DA_i$ detektieren, wobei i=1...K.

12. Verfahren nach Anspruch 11, **dadurch gekennzeichnet, dass** zur Berechnung des jeweiligen Korrekturfaktors $FK_i$ des jeweiligen Detektorelements auch die Lichtintensitäten $MA_j$ der Lichtquellen herangezogen, welche die Monitorelemente im Rahmen der Abgleichprozedur detektiert haben, wobei die jeweilige Lichtintensität $MA_j$ jeweils zu der zum Zeitpunkt des Selbsttests von dem jeweiligen Monitorelement detektierten Lichtintensität $MS_j$ in Bezug gesetzt wird, wobei j=1...N.

13. Verfahren nach Anspruch 11 oder 12, **dadurch gekennzeichnet, dass** die von den Detektorelementen im Rahmen der Abgleichprozedur von dem Abgleichmedium detektierten Lichtintensitäten $DA_i$ zum Korrigieren der von dem Wertdokument detektierten Messwerte $D_i$ verwendet werden, wobei die von dem Wertdokument aufgenommenen Messwerte $D_i$ des jeweiligen Detektorelements mit einem weiteren Korrekturfaktor $F_i$, multipliziert werden, der dem Kehrwert der bei der Abgleichprozedur des optischen Sensors von dem Abgleichmedium mittels des jeweiligen Detektorelements detektierten Lichtintensität $DA_i$ entspricht.

14. Verfahren nach einem der vorhergehenden Ansprüche, **dadurch gekennzeichnet, dass** bei dem Korrigieren der Messwerte $D_i$ auch die Temperaturabhängigkeit der Monitorelemente (3) berücksichtigt wird, wobei insbesondere mit Hilfe eines in den optischen Sensor eingebauten Temperatursensors (16) eine Temperatur der Monitorelemente zum Zeitpunkt des Selbsttests ($T_S$) gemessen wird und anhand der jeweils gemessenen Temperatur ($T_S$) ein temperaturabhängiger Faktor bestimmt wird, mit dem die zum Zeitpunkt des Selbsttest von den Monitorelementen detektierten Lichtintensitäten $MS_j$ korrigiert werden.

15. Optischer Sensor (100) zur Prüfung eines Wertdokuments, das zu dessen Prüfung in einen Erfassungsbereich des optischen Sensors gebracht wird, wobei der optische Sensor aufweist:

- eine Photodetektorzeile, die eine Anzahl K von mehreren nebeneinander angeordneten Detektorelementen (4) aufweist, die dazu ausgebildet sind, jeweils die Intensität des von einem Detektionsbereich des Wertdokuments (10) ausgehenden Lichts zu detektieren,
- eine Lichtquellenzeile, die eine Anzahl N von mehreren nebeneinander angeordneten Lichtquellen (1) aufweist, die dazu ausgebildet sind, das Wertdokument zu beleuchten,
- eine Monitordetektorzeile, die mehrere nebeneinander angeordnete, photoempfindliche Monitorelemente (3) aufweist, wobei jedes Monitorelement (3) einer der Lichtquellen (4) zugeordnet ist und dazu ausgebildet ist, die Intensität $MS_j$ des von dieser Lichtquelle emittierten und auf das jeweilige Monitorelement treffenden Lichts zu detektieren,
- eine Steuereinrichtung (30), die dazu eingerichtet ist,

- zur optischen Prüfung des Wertdokuments die N Lichtquellen (1) gleichzeitig einzuschalten, um das Wertdokument mit dem Licht der Lichtquellen zu beleuchten, und die Detektorelemente (4) der Photodetektorzeile so anzusteuern, dass diese Messwerte des Wertdokuments aufnehmen, die der von dem Wertdokument (10) als Folge der Beleuchtung ausgehenden Lichtintensität entsprechen, wobei die K Detektorelemente (4) jeweils einen Messwert $D_i$ des Wertdokuments aufnehmen, wobei i=1...K, und
- einen Selbsttest des optischen Sensors durchzuführen, bei dem die N Lichtquellen (1) eingeschaltet werden und mit Hilfe der Monitorelemente (3) die jeweilige Lichtintensität $MS_j$ der dem jeweiligen Monitor-element zugeordneten Lichtquelle (1) detektiert wird, die zum Zeitpunkt des Selbsttests auf das jeweilige Monitorelement trifft, um die zum Zeitpunkt des Selbsttests von den Monitorelementen detektierten Licht-intensitäten $MS_j$ zu überprüfen, wobei j=1...N,

- eine Auswerteeinrichtung (20), die dazu eingerichtet ist,

- die Messwerte $D_i$ des Wertdokuments anhand der zum Zeitpunkt des Selbsttests von den Monitorelemen-ten (3) detektierten Lichtintensitäten $MS_j$ zu korrigieren, wobei der zumindest eine Messwert $D_i$ des jeweiligen Detektorelements bei dem Korrigieren jeweils mit einem Korrekturfaktor $FK_i$ korrigiert wird, der individuell für das jeweilige Detektorelement (4) anhand der zum Zeitpunkt des Selbsttests von mehreren der Monitorelemente (3) detektierten Lichtintensitäten $MS_j$ berechnet wird, und
- das Wertdokument anhand der mit Hilfe des jeweiligen Korrekturfaktors $FK_i$ korrigierten Messwerte ($D_i^*$) zu prüfen.

## Claims

1. Method for checking a valuable document (10) brought into an acquisition range of an optical sensor (100), wherein the optical sensor (100) comprises:

   - a photodetector line comprising a number K of multiple adjacent detector elements (4) which are designed to detect in each case the intensity of the light emanating from a detection region of the valuable document (10),
   - a light source line comprising a number N of multiple adjacent light sources (1) which are designed to illuminate the valuable document (10),
   - a monitor detector line comprising multiple adjacent photosensitive monitor elements (3), with each monitor element being assigned to one of the light sources (1) and being designed to detect the intensity of the light emitted by this light source and incident on the respective monitor element,
   - an evaluation device (20),

   wherein the following steps are performed in the method:

   - performing a self-test of the optical sensor (100) at a time prior to the check of the valuable document (10), wherein the N light sources (1) are switched on during the self-test and the respective light intensity $MS_j$ of the light source (1) assigned to the respective monitor element and incident on the respective monitor element at the time of the self-test is detected by means of the monitor elements (3) in order to check the light intensities $MS_j$ detected by the monitor elements at the time of the self-test, where j=1...N,
   - introducing a valuable document (10) into the acquisition range of the optical sensor (100),
   - simultaneously switching on the N light sources (1) in order to illuminate the valuable document (10) introduced into the acquisition range with the light from the light sources, and recording measured values of the respective valuable document by means of the detector elements (4), wherein the measured values recorded correspond to the light intensity emanating from the respective valuable document as a consequence of the illumination, and wherein the K detector elements (4) of the photodetector line each record at least one measured value $D_i$ of the valuable document, where i=1...K,
   - using the evaluation device to correct the measured values $D_i$ on the basis of the light intensities $MS_j$ detected by the monitor elements (3) at the time of the self-test, wherein the at least one measured value $D_i$ of the respective detector element (4) is in each case corrected during the correction using a correction factor $FK_i$ that is calculated on an individual basis for the respective detector element (4) using the light intensities $MS_j$ detected at the time of the self-test by multiple of the monitor elements (3), and
   - checking the valuable document (10) by way of the evaluation device using the measured values ($D_i^*$) corrected with the aid of the respective correction factor $FK_i$.

2. Method according to Claim 1, **characterized in that** the respective light intensities $MS_j$ detected by the monitor elements (3) at the time of the self-test are included by calculation in the respective correction factor $FK_i$ in each case limited by a proportion factor $A_{ij}$ that indicates the proportion of the light intensity emitted by the respective light source that on account of the optical beam path from the light sources to the detector elements is incident on the respective detector element.

3. Method according to Claim 2, **characterized in that** the proportion factors $A_{ij}$ are determined empirically before the valuable document check, for example by virtue of placing a reference surface rather than the valuable document into the acquisition range of the detector elements, the light sources being switched on individually one after the other in order to illuminate the reference surface and the light intensity emanating from the reference surface and incident on the detector elements being detected in each case.

4. Method according to either of Claims 2 or 3, **characterized in that** the proportion factors $A_{ij}$ are calculated prior to the valuable document check by means of a numerical simulation on the basis of a model of the optical beam path from the N light sources to the K detector elements.

5. Method according to Claim 4, **characterized in that**, in the numerical simulation of the optical beam path from the N light sources to the K detector elements, a transmission matrix (A) is calculated, the matrix elements of which correspond to the proportion factors $A_{ij}$, and the transmission matrix (A), in particular the matrix elements of the transmission matrix A that correspond to the proportion factors $A_{ij}$, is/are used to correct the measured values $D_i$.

6. Method according to either of Claims 4 and 5, **characterized in that**, when calculating the respective correction factor $FK_i$ of the respective detector element, the proportion factors $A_{ij}$ for multiple or all of the N light sources are multiplied by the light intensities $MS_j$ detected by the respective monitor elements at the time of the self-test.

7. Method according to any of Claims 2 to 4, **characterized in that**, in order to calculate the respective correction factor $FK_i$, for multiple or all of the N light sources, the respective proportion factors $A_{ij}$ are multiplied by the respective light intensities $MS_j$ detected by the monitor elements at the time of the self-test, and the results of these multiplications are summed up to calculate the respective correction factor $FK_i$.

8. Method according to Claim 7, **characterized in that**, in order to correct the measured values $D_i$ of the valuable document, the respective measured value $D_i$ is multiplied by the correction factor $FK_i$, wherein the correction factors $FK_i$ are calculated according to the following formula:

$$FK_i = \frac{\sum_{j=1}^{N} A_{ij} \cdot MA_j}{\sum_{j=1}^{N} A_{ij} \cdot MS_j} \; .$$

9. Method according to any of Claims 2 to 6, **characterized in that**, in order to calculate the respective correction factor $FK_i$ of the respective detector element, for multiple or all of the N light sources, the ratio is formed in each case between the light intensity $MS_j$ detected by the monitor elements at the time of the self-test and the light intensities $MA_j$ detected by the monitor elements at an earlier time, the respective ratio $MS_j/MA_j$ is multiplied by the respective proportion factor $A_{ij}$ and the results of these multiplications are summed up to calculate the respective correction factor $FK_i$.

10. Method according to Claim 9, **characterized in that**, in order to correct the measured values $D_i$ of the valuable document, the respective measured value $D_i$ is multiplied by the respective correction factor $FK_i$, wherein the correction factors $FK_i$ are calculated according to the following formula:

$$FK_i = \frac{\sum_{j=1}^{N} A_{ij}}{\sum_{j=1}^{N} A_{ij} \cdot \frac{MS_j}{MA_j}} \; .$$

11. Method according to any of the preceding claims, **characterized in that** the self-test is preceded by a calibration procedure in which a calibration medium is brought into the acquisition range of the optical sensor (100), and the N light sources (1) are switched on in order to illuminate the calibration medium, wherein

- the monitor elements of the optical sensor each detect a light intensity $MA_j$ that corresponds to the light intensity emitted by the respective light source during the calibration procedure, where j=1...N, and/or
- the detector elements of the optical sensor each detect a light intensity $DA_i$ emanating from the calibration medium, where i=1...K.

12. Method according to Claim 11, **characterized in that** the light intensities $MA_j$ of the light sources detected by the monitor elements within the scope of the calibration procedure are also used to calculate the respective correction

13

factor $FK_i$ of the respective detector element, wherein the respective light intensity $MA_j$ in each case is related to the light intensity $MS_j$ detected by the respective monitor element at the time of the self-test, where j=1...N.

13. Method according to Claim 11 or 12, **characterized in that** the light intensities $DA_i$ detected within the scope of the calibration procedure from the calibration medium by the detector elements are used to correct the measured values $D_i$ detected from the valuable document, wherein the measured values $D_i$ of the respective detector element that are recorded from the valuable document are multiplied by a further correction factor $F_i$, which corresponds to the inverse of the light intensity $DA_i$ detected in the calibration procedure for the optical sensor from the calibration medium by means of the respective detector element.

14. Method according to any of the preceding claims, **characterized in that** the temperature dependence of the monitor elements (3) is also taken into account in the correction of the measured values $D_i$, wherein a temperature of the monitor elements at the time of the self-test ($T_S$) is measured, in particular by means of a temperature sensor (16) installed in the optical sensor, and the measured temperature ($T_S$) is used to determine a temperature-dependent factor that is used to correct the light intensities $MS_j$ detected by the monitor elements at the time of the self-test.

15. Optical sensor (100) for checking a valuable document that for checking purposes is brought into an acquisition range of the optical sensor, wherein the optical sensor comprises:

- a photodetector line comprising a number K of multiple adjacent detector elements (4) which are designed to detect in each case the intensity of the light emanating from a detection region of the valuable document (10),
- a light source line comprising a number N of multiple adjacent light sources (1) which are designed to illuminate the valuable document,
- a monitor detector line comprising multiple adjacent photosensitive monitor elements (3), with each monitor element (3) being assigned to one of the light sources (4) and being designed to detect the intensity $MS_j$ of the light emitted by this light source and incident on the respective monitor element,
- a control device (30) that is configured
- to switch on the N light sources (1) simultaneously for the optical check of the valuable document, in order to illuminate the valuable document with the light from the light sources, and to control the detector elements (4) of the photodetector line in such a way that these record measured values of the valuable document that correspond to the light intensity emanating from the valuable document (10) as a result of the illumination, wherein the K detector elements (4) each record a measured value $D_i$ of the valuable document, where i=1...K, and
- to perform a self-test of the optical sensor, in which the N light sources (1) are switched on and the respective light intensity $MS_j$ of the light source (1) assigned to the respective monitor element and incident on the respective monitor element at the time of the self-test is detected by means of the monitor elements (3) in order to check the light intensities $MS_j$ detected by the monitor elements at the time of the self-test, where j=1...N,
- an evaluation device (20) that is configured
- to correct the measured values $D_i$ of the valuable document on the basis of the light intensities $MS_j$ detected by the monitor elements (3) at the time of the self-test, wherein the at least one measured value $D_i$ of the respective detector element is in each case corrected during correction using a correction factor $FK_i$ that is calculated on an individual basis for the respective detector element (4) using the light intensities $MS_j$ detected at the time of the self-test by multiple of the monitor elements (3), and
- to check the valuable document using the measured values ($D_i$*) that have been corrected with the respective correction factor $FK_i$.

## Revendications

1. Procédé pour contrôler un document de valeur (10) amené dans une zone de détection d'un capteur optique (100), le capteur optique (100) possédant :

- une ligne de détecteurs photoélectriques, qui possède un nombre K de plusieurs éléments détecteurs (4) disposés les uns à côté des autres, qui sont configurés pour détecter respectivement l'intensité de la lumière émise par une zone de détection du document de valeur (10),
- une ligne de sources de lumière, qui possède un nombre N de plusieurs sources de lumière (1) disposées les unes à côté des autres, qui sont configurées pour éclairer le document de valeur (10),
- une ligne de détecteurs de surveillance, qui possède plusieurs éléments de surveillance photosensibles (3) disposés les uns à côté des autres, chaque élément de surveillance étant associé à l'une des sources de lumière (1) et étant configuré pour détecter l'intensité de la lumière émise par cette source de lumière et venant frapper l'élément de surveillance respectif,
- un dispositif d'évaluation (20),

les étapes suivantes étant exécutées avec le procédé :

- réalisation d'un autotest du capteur optique (100) à un moment précédant le contrôle du document de valeur (10), lors de l'autotest, les N sources de lumière (1) étant allumées et, à l'aide des éléments de surveillance (3), l'intensité lumineuse $MS_j$ respective de la source de lumière (1) associée à l'élément de contrôle respectif qui, au moment de l'autotest, vient frapper l'élément de surveillance respectif étant détectée, afin de vérifier les intensités lumineuses $MS_j$ détectées par les éléments de surveillance au moment de l'autotest, avec j = 1...N,
- introduction d'un document de valeur (10) dans la zone de détection du capteur optique (100),
- simultanément, allumage des sources de lumière N (1) afin d'éclairer le document de valeur (10) introduit dans la zone de détection avec la lumière des sources de lumière, et enregistrement des valeurs mesurées du document de valeur respectif au moyen des éléments détecteurs (4), les valeurs mesurées enregistrées correspondant à l'intensité lumineuse émise par le document de valeur respectif en conséquence de l'éclairage et les K éléments détecteurs (4) de la ligne de détecteurs photoélectriques enregistrant respectivement au moins une valeur mesurée $D_i$ du document de valeur, avec i = 1...K,
- correction des valeurs mesurées $D_i$ par le dispositif d'évaluation à l'aide des intensités lumineuses $MS_j$ détectées au moment de l'autotest par les éléments de surveillance (3), l'au moins une valeur mesurée $D_i$ de l'élément détecteur (4) respectif étant corrigée lors de la correction à chaque fois avec un facteur de correction $Fk_i$, lequel est calculé individuellement pour l'élément détecteur (4) respectif à l'aide des intensités lumineuses $MS_j$ détectées au moment de l'autotest par plusieurs des éléments de surveillance (3), et
- vérification du document de valeur (10) par le dispositif d'évaluation à l'aide des valeurs mesurées ($D_i$*) corrigées à l'aide du facteur de correction $FK_i$ respectif.

2. Procédé selon la revendication 1, **caractérisé en ce que** les intensités lumineuses $MS_j$ respectivement détectées par les éléments de surveillance (3) au moment de l'autotest sont incluses, en étant respectivement limitées par un facteur de proportion $A_{ij}$, dans le calcul du facteur de correction $Fk_i$ respectif, qui indique quelle proportion de l'intensité lumineuse émise par la source de lumière respective vient frapper l'élément de détection respectif en raison du trajet de rayon optique des sources de lumière jusqu'aux éléments détecteurs.

3. Procédé selon la revendication 2, **caractérisé en ce que** les facteurs de proportion $A_{ij}$ sont déterminés empirique-ment avant la vérification des documents de valeur, par exemple en plaçant une surface de référence à la place du document de valeur dans la zone de détection des éléments détecteurs, en allumant les sources de lumière individuellement l'une après l'autre afin d'éclairer la surface de référence et en détectant l'intensité lumineuse respectivement émise par la surface de référence et venant frapper les éléments détecteurs.

4. Procédé selon l'une des revendications 2 ou 3, **caractérisé en ce que** les facteurs de proportion $A_{ij}$ sont calculés avant la vérification du document de valeur au moyen d'une simulation numérique à l'aide d'un modèle du trajet de rayon optique des rayons depuis les N sources de lumière vers les K éléments détecteurs.

5. Procédé selon la revendication 4, **caractérisé en ce que**, lors de la simulation numérique du trajet de rayon optique depuis les N sources de lumière vers les K éléments détecteurs, une matrice de transmission (A) est calculée, dont les éléments matriciels correspondent aux facteurs de proportion $A_{ij}$, et la matrice de transmission (A), en particulier les éléments matriciels de la matrice de transmission A correspondant aux facteurs de proportion $A_{ij}$, est utilisée / sont utilisés pour corriger les valeurs mesurées $D_i$.

6. Procédé selon l'une des revendications 4 à 5, **caractérisé en ce que**, lors du calcul du facteur de correction $FK_i$ respectif de l'élément détecteur respectif, pour plusieurs ou toutes les sources de lumière N, les facteurs de proportion $A_{ij}$ sont multipliés par les intensités lumineuses $MS_j$ détectées par les éléments de surveillance respectifs au moment de l'autotest.

7. Procédé selon l'une des revendications 2 à 4, **caractérisé en ce que**, pour calculer le facteur de correction $FK_i$ respectif, pour plusieurs ou toutes les sources de lumière N, les facteurs de proportion $A_{ij}$ respectifs sont multipliés par les intensités lumineuses $MS_j$ respectivement détectées par les éléments de surveillance au moment de l'autotest et les résultats de ces multiplications sont additionnés afin de calculer le facteur de correction $FK_i$ respectif.

8. Procédé selon la revendication 7, **caractérisé en ce que**, pour corriger les valeurs mesurées $D_i$ du document de valeur, la valeur mesurée $D_i$ respective est multipliée par le facteur de correction $FK_i$, les facteurs de correction $FK_i$ étant calculés selon la formule suivante :

$$FK_i = \frac{\sum_{j=1}^{N} A_{ij} \cdot MA_j}{\sum_{j=1}^{N} A_{ij} \cdot MS_j}.$$

9. Procédé selon l'une des revendications 2 à 6, **caractérisé en ce que**, pour calculer le facteur de correction $FK_i$ respectif de l'élément détecteur respectif, pour plusieurs ou toutes les sources de lumière N, le rapport entre l'intensité lumineuse $MS_j$ détectée par les éléments de surveillance au moment de l'autotest et les intensités lumineuses $MA_j$ détectées à un moment antérieur par les éléments de surveillance est respectivement calculé, le rapport $MS_j/MA_j$ respectif est multiplié par le facteur de proportion $A_{ij}$ respectif et les résultats de ces multiplications sont additionnés afin de calculer le facteur de correction $FK_i$ respectif.

10. Procédé selon la revendication 9, **caractérisé en ce que**, pour corriger les valeurs mesurées $D_i$ du document de valeur, la valeur mesurée $D_i$ respective est multipliée par le facteur de correction $Fk_i$ respectif, les facteurs de correction $FK_i$ étant calculés selon la formule suivante :

$$FK_i = \frac{\sum_{j=1}^{N} A_{ij}}{\sum_{j=1}^{N} A_{ij} \cdot \frac{MS_j}{MA_j}}.$$

11. Procédé selon l'une des revendications précédentes, **caractérisé en ce qu'**une procédure d'ajustement est effectuée avant l'autotest, lors de laquelle un milieu d'ajustement est amené dans la zone de détection du capteur optique (100) et les N sources de lumière (1) sont allumées afin d'éclairer le milieu d'ajustement,

- les éléments de surveillance du capteur optique détectant respectivement une intensité lumineuse $MA_j$ qui correspond à l'intensité lumineuse émise par la source de lumière respective lors de la procédure d'ajustement, avec j = 1...N, et/ou
- les éléments détecteurs du capteur optique détectant respectivement une intensité lumineuse $DA_i$ provenant du milieu d'ajustement, avec i = 1...K.

12. Procédé selon la revendication 11, **caractérisé en ce que**, pour calculer le facteur de correction $FK_i$ respectif de l'élément de détection respectif, les intensités lumineuses $MA_j$ des sources de lumière qu'ont détecté les éléments de surveillance dans le cadre de la procédure d'ajustement sont également utilisées, l'intensité lumineuse $MA_j$ respective étant respectivement mise en relation avec l'intensité lumineuse $MS_j$ détectée par l'élément de surveillance respectif au moment de l'autotest, avec j = 1...N.

13. Procédé selon la revendication 11 ou 12, **caractérisé en ce que** les intensités lumineuses $DA_i$ du milieu d'ajustement détectées par les éléments détecteurs dans le cadre de la procédure d'ajustement sont utilisées pour corriger les valeurs mesurées $D_i$ détectées du document de valeur, les valeurs mesurées $D_i$ de l'élément détecteur respectif enregistrées par le document de valeur étant multipliées par un facteur de correction supplémentaire $F_i$, qui correspond à l'inverse de l'intensité lumineuse $DA_i$ détectée lors de la procédure d'ajustement du capteur optique à partir du milieu d'ajustement au moyen de l'élément détecteur respectif.

14. Procédé selon l'une des revendications précédentes, **caractérisé en ce que** lors de la correction des valeurs mesurées $D_i$, la dépendance à la température des éléments de surveillance (3) est également prise en compte, une température des éléments de surveillance étant mesurée au moment de l'autotest ($T_S$) notamment à l'aide d'un capteur de température (16) intégré dans le capteur optique et un facteur dépendant de la température étant déterminé à l'aide de la température ($T_S$) respectivement mesurée, avec lequel sont corrigées les intensités lumineuses $MS_j$ détectées par les éléments de surveillance au moment de l'autotest.

15. Capteur optique (100) destiné à vérifier un document de valeur qui est amené dans une zone de détection du capteur optique afin d'être vérifié, le capteur optique possédant :

- une ligne de détecteurs photoélectriques, qui possède un nombre K de plusieurs éléments détecteurs (4) disposés les uns à côté des autres, qui sont configurés pour détecter respectivement l'intensité de la lumière émise par une zone de détection du document de valeur (10),

- une ligne de sources de lumière, qui possède un nombre N de plusieurs sources de lumière (1) disposées les unes à côté des autres, qui sont configurées pour éclairer le document de valeur,

- une ligne de détecteurs de surveillance, qui possède plusieurs éléments de surveillance photosensibles (3) disposés les uns à côté des autres, chaque élément de surveillance (3) étant associé à l'une des sources de lumière (4) et étant configuré pour détecter l'intensité $MS_j$ de la lumière émise par cette source de lumière et venant frapper l'élément de surveillance respectif,

- un dispositif de commande (30), qui est conçu pour

- en vue du contrôle optique du document de valeur, allumer simultanément les N sources de lumière (1) afin d'éclairer le document de valeur avec la lumière des sources de lumière, et commander les éléments détecteurs (4) de la ligne de détecteurs photoélectriques de manière à ce que ceux-ci enregistrent les valeurs mesurées du document de valeur, qui correspondent à l'intensité lumineuse émise par le document de valeur (10) en conséquence de l'éclairage, les K éléments détecteurs (4) enregistrant respectivement une valeur mesurée $D_i$ du document de valeur, avec i = 1...K, et

- réaliser un autotest du capteur optique, lors duquel les N sources de lumière (1) sont allumées et, à l'aide des éléments de surveillance (3), détecter l'intensité lumineuse $MS_j$ respective de la source de lumière (1) associée à l'élément de contrôle respectif qui, au moment de l'autotest, vient frapper l'élément de surveillance respectif, afin de vérifier les intensités lumineuses $MS_j$ détectées par les éléments de surveillance au moment de l'autotest, avec j = 1...N,

- un dispositif d'évaluation (20), qui est conçu pour

- corriger les valeurs mesurées $D_i$ du document de valeur à l'aide des intensités lumineuses $MS_j$ détectées au moment de l'autotest par les éléments de surveillance (3), l'au moins une valeur mesurée $D_i$ de l'élément détecteur respectif étant corrigée lors de la correction à chaque fois avec un facteur de correction $Fk_i$, lequel est calculé individuellement pour l'élément détecteur (4) respectif à l'aide des intensités lumineuses $MS_j$ détectées au moment de l'autotest par plusieurs des éléments de surveillance (3), et

- vérifier le document de valeur à l'aide des valeurs mesurées ($D_i^*$) corrigées à l'aide du facteur de correction $FK_i$ respectif.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10243051 A1